Europäisches Patentamt

European Patent Office

Office européen des brevets

(11) Publication number: **0 189 957**
**B1**

(12) **EUROPEAN PATENT SPECIFICATION**

(45) Date of publication of patent specification: **18.07.90**

(51) Int. Cl.⁵: **A 01 B 29/04**

(21) Application number: **86200076.7**

(22) Date of filing: **17.01.86**

(54) Soil cultivating machine.

(30) Priority: **21.01.85 NL 8500135**

(43) Date of publication of application:
**06.08.86 Bulletin 86/32**

(45) Publication of the grant of the patent:
**18.07.90 Bulletin 90/29**

(84) Designated Contracting States:
**DE FR GB NL**

(56) References cited:
**EP-A-0 039 792**
**EP-A-0 081 271**
**DE-A-3 317 485**
**DE-A-3 326 236**
**DE-C- 512 078**
**GB-A-2 048 634**
**US-A-3 136 078**

(73) Proprietor: **C. van der Lely N.V.**
**Weverskade 10 P.O. Box 26**
**NL-3155 ZG Maasland (NL)**

(72) Inventor: **van der Lely, Olaf**
**7 Brüschenrain**
**Zug (CH)**

(74) Representative: **Mulder, Herman et al**
**Octrooibureau Van der Lely N.V. Weverskade 10**
**P.O. Box 26**
**NL-3155 ZG Maasland (NL)**

Courier Press, Leamington Spa, England.

## Description

The invention relates to a soil cultivating machine comprising a frame supporting at least one packer roller, the said roller having a cylindrical carrier provided with equally spaced tines or cams between which scrapers are arranged, which scrapers comprise a scraper portion at the rear of the roller with respect to the intended direction of travel of the machine, wherein said scraper portion extends obliquely upwardly and rearwardly from said carrier to wipe off soil at least therefrom and each is mounted on a support arm which comprises in respect to the frame a downwardly extending portion.

A soil cultivating machine of the kind set forth is known from the German patent application 33 17 485.

With this known packer roller earth that sticks to the cylindrical carrier between the tines or cams is scraped off during operation by the scraper portion rather abruptly which results in a kind of braking action that is unfavourable for a proper working of the roller.

The invention now seeks to provide a roller of the kind set forth, whereby the scraping of the sticking earth can be achieved by gradually loosening the same.

In accordance with the invention there is provided a soil cultivating machine comprising a roller of the kind set forth, whereby the support arm is attached to the frame at a point which, as seen from above, is disposed in front of the axis of rotation of the roller, the said portion of said arm comprises an elongation extending rearwardly underneath the said carrier between said tines or cams over at least half the circumference of the carrier and at its rearside is provided with the said scraping portion. By means of this provision it is possible to obtain a pulling wiping-off of the soil, whereby the soil is gradually loosened to be removed finally of the free end of the scraper portion, so that the above-mentioned braking action can be dealt with effectively.

The German patent 512 078 relates to a roller by means of which the soil between rows of plants is worked in order to achieve an aeration. The roller is provided with sets of tines that are arranged equidistantly from each other whereby, between the sets of tines, scrapers are arranged that are pivotally connected in front of the roller and which, from their pivotal connection, extend obliquely downwardly and to the rear merging into a part which extends substantially horizontally between the sets of tines and extends until beyond the roller where it is provided with an upwardly bent end portion. By means of the scrapers, the holes made by the tines can be filled more or less by means of earth that has been scraped off from the tines.

The European patent application 0039792 relates to a rotary soil cultivator having soil working members that, during operation, are driven about a horizontal transverse shaft and to the rear of which a crumbler roller is disposed.

Between the power driven soil working members and the roller there is provided a rake-like member constituted by bars that from a pivotal connecting point extend downwardly and rearwardly partly concentrically to the axis of rotation of the roller. By means of the grating constituted by the bars, soil, that is thrown rearwardly by the soil working members, can be separated in such a way that lumps are guided downwardly and can be covered by fine earth that moves through the openings between the bars. The bars do not have any scraping action during operation.

For a better understanding of the invention and to show how the same may be carried into effect, reference will now be made, by way of example, to the accompanying drawings, in which:

Figure 1 is a plan view of a soil cultivating machine comprising a roller according to the invention,

Figure 2 is, to an enlarged scale, a section taken on the line II—II in Figure 1,

Figure 3 is an elevation according to the arrow III in Figure 2,

Figure 4 is a section according to Figure 2 of a second embodiment of a construction in accordance with the invention,

Figure 5 is an elevation according to the arrow V in Figure 4.

The apparatus shown in the drawings concerns a soil cultivating machine, in particular a machine for the preparation of a seed bed.

The machine comprises a hollow frame portion 1 extending transversely to the direction of travel A and carrying, equally interspaced at preferably 25 centimeters, the upwardly, preferably vertically, directed shafts 2 of soil working members 3.

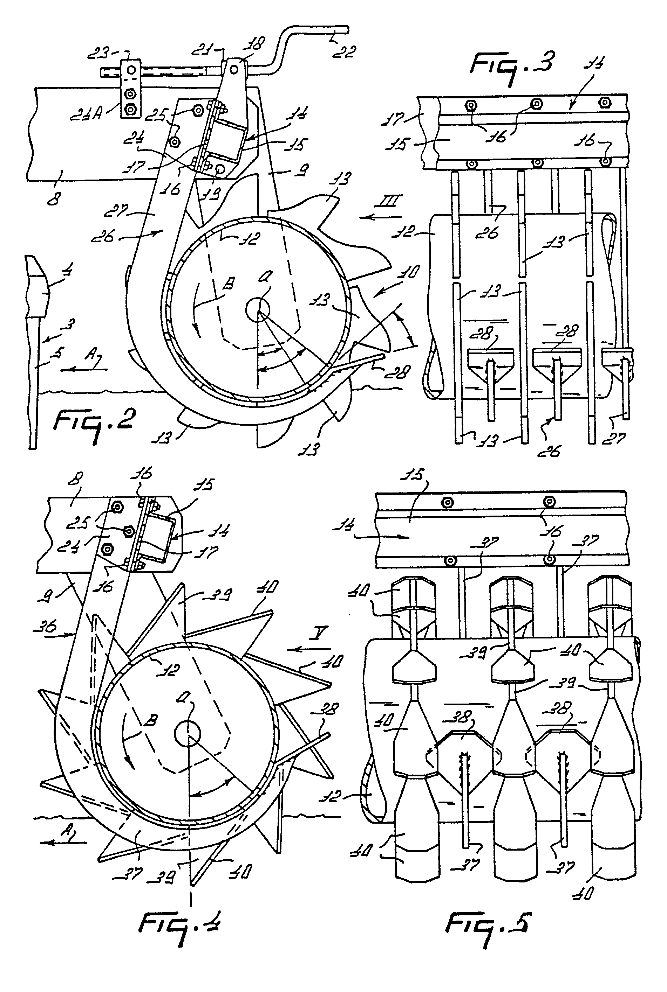

Each of the soil working members 3 comprises an at least substantially horizontal carrier 4, which is arranged on the end of a shaft 2 projecting at the bottom from the frame portion 1. At its ends, the carrier 4 is provided with downwardly extending soil working elements 5 in the form of tines. The ends of the hollow frame portion 1 are provided with plates 6, which extend at least substantially parallel to the direction of travel A of the machine and which reach to above the frame portion 1. Near the front side, the plates 6 are provided with a pivot 7, which extends transversely to the direction of travel A and around which are arranged swivably arms 8 extending rearwardly along the inner side of the plates. At the rear side, each of the arms 8 comprises a support 9 which extends obliquely downwardly and rearwardly. Between the lower ends of the supports 9 there is arranged, freely rotatably, a roller 10 which in this embodiment is constructed as a packer roller. Near the rear side of the frame portion 1 there is provided an adjusting mechanism, which comprises a screw spindle 11 by means of which the arms 8 are adjustable in height about the pivots 7 situated near the front side of the frame portion 1, in such a way that by means of the roller 10 the working depth of the soil working members 3 can be regulated. The roller 10 comprises a cylindrical carrier 12 on which there are arranged, equally interspaced, groups of plate-shaped tines or cams 13. Two tines or cams 13 are shaped from one piece of plate. The tines or cams 13 each comprise an at least substantially radially extending straight side which at its free end merges in an S-shaped side situated at least substantially tangentially relative to the axis of rotation *a* of the roller 10 (see Figure 2), and which side, relative to the direction of rotation B of the roller, is situated at the leading side.

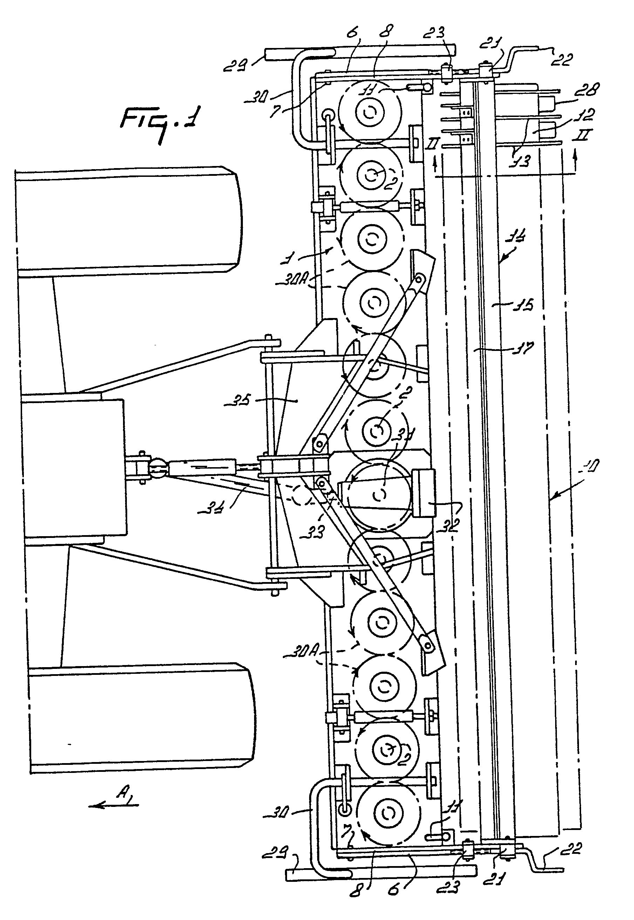

Near the rear side, there is arranged between the arms 8 a hollow beam 14 which extends transversely to the direction of travel A and which, as is apparent from Figure 2, seen in plan view, is situated exactly in front of the axis of rotation *a* of the roller l0. The beam 14 comprises a U-shaped portion 15 formed from plate, the legs of which portion extend somewhat upwardly and forwardly. The legs are each provided with a squarely bent portion which by means of bolts 16 is clamped against a straight plate 17. At the ends of the beam 14, the U-shaped portion 15 is provided with supports 18 which under the beam are freely swivable about a pivot 19 arranged at the inner side of each of the arms 8. The upper side of the supports 18, which extend to above the upper side of the arms 8, is provided with a swivable support portion 21 comprising a screw-threaded bore, with which a screw spindle 22 can co-operate. The screw spindle 22 extends into the direction of travel A of the machine and, near the front end, is supported by means of a support 23 which, like the support portion 21, is pivotable about a shaft which extends transversely to the direction of travel A and which is supported by lips 24A arranged at both sides of the arms 8. Onto the plate 17 at the front side of the beam 14 there are mounted plate-shaped supports 24 by means of the bolts 16 with which the plate is clamped against the bent ends of the legs of the U-shaped portion 15. The supports 24 extend substantially parallel to the direction of travel A of the machine. To the plate-shaped supports 24 there are attached by means of bolts 25 scrapers 26 which, as is apparent from Figures 1 and 3, each are located between two adjacent crowns of tines or cams 13. The scrapers 26 each comprise a support in the form of a strip-shaped support arm 27, the broadest side of which extends at least substantially parallel to a plane perpendicular to the axis of rotation *a* of the roller 10. Each support arm 27 comprises, counted from the attachment to the plate shaped support 24, a straight portion which is situated at least substantially tangentially relative to the axis of rotation *a* of the roller 10 and which in the region of the axis of rotation merges into a portion that is concentric relative to the axis of rotation *a*, the said latter portion being situated at a slight distance from the outer side of the cylindrical carrier 12. As is apparent from Figure 2, the width of the latter portion of the support arm gradually decreases to a point substantially perpendicular below the axis of rotation

*a* of the roller 10, from where the width remains practically constant to the end. The inner side of the end is located at a point where a radial with a vertical plane through the axis of rotation *a* includes an angle of ± 45°. The end extends somewhat upwardly and is provided with a plate-shaped portion 28. The plate-shaped portion 28 comprises a rectangular portion which extends to beyond the end of the strip-shaped support arm 27 over a length which approximately corresponds to the width of the end, all this such that the free end of the plate-shaped portion 28 is situated in the region of the ends of the tines or cams 13. The angular portion of the plate-shaped portion 28 extends to near the crowns of tines or cams 13 (Figure 3) and preferably has a width of ± 10 centimeters. From the inner side of the end, the angular portion of the plate-shaped portion 28 merges via a folding line into a V-shaped portion, of which the point, directed forwardly relative to the direction of rotation B of the roller, is situated at a circumferential angle of ± 30° with the vertical plane through the axis of rotation *a* of the roller l0. The V-shaped portion lies against the outer circumference of the cylindrical carrier 12 and also determines the free space between the carrier 12 and the inner side of the portion of the strip-shaped arm 27 which is concentrical relative to the axis of rotation *a*. The rectangular portion of the plate-shaped portion 28 includes with the tangential plane in the region of the inner side of the free end of the strip-shaped arm 27 an angle of ± 30° (Figure 2). The strip-shaped arms 27 are arranged such that they are situated in the middle between two adjacent crowns of tines or cams 13 (Figure 3). By means of the screw spindles 22 which are disposed above the arms 8, extend in the direction of travel A and are arranged at least substantially horizontally, it is possible to swivel the beam 14 around the pivots 19, in which connection the distance between the inner side of the strip-shaped arm 27, the plate-shaped portion 28 and the outer circumference of the cylindrical carrier 12 changes. Preferably, however, the whole is so adjusted that the V-shaped portion of the plate-shaped portion 28 practically bears against the outer circumference of the cylindrical carrier 12. Near the ends of the hollow frame portion 1 there are arranged plates 29, which plates are pivotable about a shaft which extends in the direction of travel A and which is formed by a part of a carrier arm 30, and during operation assume a position as is indicated in Figure 1. Inside the hollow frame portion 1, the shafts 3 of the soil working members are each provided with a straight-toothed gear wheel 30A, in such a way that the gear wheels on the shafts 2 of adjacent soil working members 3 are in driving connection with each other. Near the middle, a shaft is extended upwardly and reaches with its extension into a gear box 31 which is arranged at the top side of the hollow frame portion 1. Inside the gear box 31, the extension is via a conical gear transmission and a change-speed gear 32 located at the rear side of the gear box in driving connection with a shaft 33, which extends into the direction of travel A and which at the leading side projects outside the gear box and via an intermediate shaft 34 can be coupled with the take-off shaft of a tractor to move the apparatus.

In order to be able to attach the machine to a tractor, the front side of the hollow frame portion 1 is provided with a trestle 35 comprising a three-point hitch for coupling to the three-point lifting device of a tractor.

The working of the apparatus described in the foregoing is as follows:

During operation, the machine is coupled with the trestle 35 to the three-point lifting device of the tractor and, during forward movement in the direction of travel according to arrow A, the respective soil working members 3 are caused to rotate from the take-off shaft of the tractor via the intermediate shaft 34 and the transmission described in the foregoing in a direction as indicated by arrows in Figure 1, whereby the downwardly extending tine-like soil working members 5 work at least adjoining strips of soil. As has already been stated, the depth of penetration of the respective soil working members 3 can be adjusted by means of the roller 10. Prior to the work being started the desired position of the scrapers 26 can be adjusted by means of the screw spindles 22.

As has already been stated, preferably a position is adjusted in which the plate-shaped portion 28 bears with its V-shaped portion against the outer circumference of the cylindrical carrier 12. However, if the soil contains crop remnants, it may be advantageous to enlarge the distance between the outer circumference of the carrier 12 and the scrapers 26 somewhat.

By means of the scraper 26 according to the embodiment shown it is achieved that soil possibly adhering to the roller and reaching between the crowns of tines or cams 13 already at the front side is caught by means of the strip-shaped support arm 27 near the middle between two crowns of tines or cams, and is subsequently wiped off at the rear side of the roller exactly above the ground via the V-shaped portion bearing against the cylindrical carrier 12 and the by means of a bend bent-off rectangular portion of the plate-shaped portion 28, the wiped-off soil via the rectangular portion of the plate-shaped portion 28 being dropped in small quantities directly onto the surface compressed by the roller 10 and undesirable clod formation being prevented. Owing to the specific position of the scraping plate-shaped portion 28, whereby the portion is attached near the roller and extends freely rearwardly, crop remnants like straw and weeds can be removed easily.

Owing to the position of the scrapers 26 according to the invention there is obtained a so-called pulling action, according to which the adhering soil carried along by the roller 10 is wiped off gradually via the strip-shaped arm 27 and finally via the plate-shaped portion 28, which greatly enhances an effective scraping activity. By enlarging the distance between the scrapers 26 and the cylindrical carrier 12 it is possible to effect the removal of the wiped-off soil even at a lower position, which may be useful on very heavy soils.

In the embodiment shown in Figures 4 and 5, scrapers 36 are arranged in front of the roller 10A in the same manner as in the first embodiment; however, here the beam man 14 is fixed relative to the arms 8 to portions of the arms which extend to behind the supports 9. In this embodiment the scrapers 36 are practically identical with the scrapers 26 in the first embodiment. However, the free end of a strip-shaped arm 37 is situated at a higher level, so that the free end of a plate-shaped portion 38 is located in the region of the axis of rotation $a$ of the roller 10A (Figure 4). Each plate-shaped portion 38 has a V-shaped portion directed forwardly relative to the direction of rotation of the roller, the point of which portion is situated at a circumferential angle of $\pm$ 45° with the vertical plane through the axis of rotation $a$ of the roller. In the region of the inner side of the free end of the strip-shaped arm 37, the V-shaped portion of the plate-shaped portion 38 merges via a folding line into a portion which is substantially V-shaped having a rearwardly directed, truncated point with a side which is situated at least substantially parallel to the axis of rotation $a$ of the roller 10A (Figure 5). The roller 10A comprises tines or cams 39 which each have an at least substantially radially extending side, which via an angle of $\pm$ 30° merges into an at least substantially tangentially extending side (Figure 4), which merges in a radial side of the next adjoining tine or cam. The at least substantially tangentially extending side of each tine or cam comprises a blade 40, the sides of which extend V-shaped at the side facing the next adjoining tine or cam (Figure 5) and at least substantially near the middle merge into a side extending at least substantially parallel to a plane perpendicular to the axis of rotation $a$ of the roller, which sides via converging sides merge into a side extending at least substantially parallel to the axis of rotation $a$ of the roller 10A. The largest width of a blade 40 is to be found between the sides extending at least substantially parallel to a plane perpendicular to the axis of rotation $a$ of the roller 10A, and amounts to $\pm$ half the distance between two tines or cams 39 of next adjoining crowns. Owing to the presence of the blades 40, during operation, the roller 10A is driven more forcefully, so that the effect of the specific scrapers 36 may be shown to better advantage. Owing to the blades 40 there is also obtained an intensive mixing of soil and crop remnants. The V-shaped free end of a plate-shaped portion 38 provides a proper removal of the scraped-off material, while practically no crop remnants remain adhering to this portion.

**Claims**

1. A soil cultivating machine comprising a frame supporting at least one packer roller (10), the said roller having a cylindrical carrier (12) provided with equally spaced tines or cams (13) between which scrapers (26, 36, 41) are arranged, which scrapers comprise a scraper portion (28, 38) at the rear of the roller with respect to the intended direction of travel of the machine wherein said scraper portion extends obliquely upwardly and rearwardly from said carrier (12) to wipe off soil at least therefrom and each is mounted on a support arm (27, 37) which comprises in respect to the frame a downwardly extending portion characterized in that the support arm (27, 37) is attached to the frame at a point which, as seen from above, is disposed in front of the axis of rotation (a) of the roller (10), the said portion of said arm (27, 37) comprises an elongation extending rearwardly underneath the said carrier (12) between said tines or cams (13) over at least half the circumference of the carrier (12) and at its rearside is provided with the said scraping portion (28, 38).

2. A soil cultivating machine as claimed in claim 1, characterized in that said downwardly extending portion in the region of the carrier (12) of the roller (10) merges into a portion, that extends concentrically relative to the axis of rotation (a) and ends at the rear side of the roller (10) where it is provided with said scraping portion (28, 38).

3. A soil cultivating machine as claimed in claim 2, characterized in that the said concentrically extending portion terminates in a point where a radial through this point includes an angle of ± 45° with a vertical plane through the axis of rotation (a) of the roller (10).

4. A soil cultivating machine as claimed in any one of the preceding claims, characterized in that the free end of the support arm (27, 37) is provided with a plate-shaped scraping portion (28, 38) which comprises a portion that from the free end of the support arm (27, 37) extends obliquely upwardly and rearwardly, and reaches to near the tines or cams (13) of the roller (10).

5. A soil cultivating machine as claimed in claim 4, characterized in that the said portion of the plate-shaped portion (28, 38) in the region of the front side of the free end of the support arm (27, 37) merges via a folding line into a V-shaped portion extending forwardly relative to the direction of rotation (B) of the roller (10).

6. A soil cultivating machine as claimed in any one of claims 2 to 4 and claim 5, characterized in that the inner side of the support arm (27, 37) is located at a space from the cylindrical carrier (12) of the roller (10), which space is at least substantially equal to the thickness of the V shaped portion of the plate-shaped portion (28, 38) of the scraper (26, 36).

7. A soil cultivating machine as claimed in any one of claims 4 6, characterized in that the free end of the plate shaped portion (28) is located below a horizontal plane through the axis of rotation (a) of the roller (10).

8. A soil cultivating machine as claimed in any one of the preceding claims, characterized in that the scrapers (26) are adjustable by means of an adjusting mechanism, which adjusting mechanism comprises a screw spindle (22) extending at least substantially in the direction of travel of the machine.

9. A soil cultivating machine as claimed in any one of the preceding claims, characterized in that the roller (10) comprises cams (13) which are provided with a blade (40) that extends at least substantially parallel to the axis of rotation (a) of the roller (10).

10. A soil cultivating machine as claimed in claim 8 or 9, characterized in that said blade (40) extends V-shaped towards the ends.

11. A soil cultivating machine as claimed in claim 10, characterized in that said blade (40) is arranged at a tangentially extending side of a cam (39).

12. A soil cultivating machine as claimed in any one of claims 4 to 10, characterized in that the plate-shaped scraping portion (38) of the scraper (36) has a smaller width at the front and back side than near the middle.

13. A soil cultivating machine as claimed in any one of the preceding claims, characterized in that it comprises a plurality of soil cultivating members (3) which are rotatable about upwardly directed shafts and which are arranged in a row, the roller (10) being arranged behind the soil cultivating members (13) and, relative to the soil cultivating members, being adjustable and fixable in height in several positions.

**Patentansprüche**

1. Bodenbearbeitungsmaschine mit einem Gestell, das mindestens eine Packerwalze (10) abstützt, die einen zylindrischen Träger (12) aufweist, der mit in gleichen Abständen angeordneten Zähnen oder Nocken (13) versehen ist, zwischen denen Abstreifer (26, 36, 41) angeordnet sind, welche ein Abstreiferteil (28, 38) aufweisen, das in bezug auf die Arbeitsrichtung der Maschine an der Rückseite der Walze angeordnet und von dem Träger (12) aus schräg nach oben und hinten gerichtet ist, um mindestens von dem Träger Erde abzustreifen, wobei jedes Abstreiferteil auf einem Tragarm (27, 37) angeordnet ist, der einen in bezug auf das Gestell nach unten gerichteten Abschnitt aufweist, dadurch gekennzeichnet, daß der Tragarm (27, 37) an dem Gestell an einer Stelle angebracht ist, die in Draufsicht vor der Drehachse (a) der Walze (10) liegt, und daß der genannte Abschnitt des Tragarmes (27, 37) eine Verlängerung aufweist, die sich nach hinten unter den Träger (12) und zwischen den Zinken oder Nocken (13) über mindestens den halben Umfang des Trägers (12) erstreckt und an ihrer Rückseite mit dem Abstreiferteil (28, 38) versehen ist.

2. Bodenbearbeitungsmaschine nach Anspruch 1, dadurch gekennzeichnet, daß der abwärts gerichtete Abschnitt des Tragarmes im Bereich des Trägers (12) der Walze (10) in einen Abschnitt übergeht, der zur Drehachse (a) konzentrisch verläuft und an der Rückseite der Walze (10) endet, wo er mit dem Abstreiferteil (28, 38) versehen ist.

3. Bodenbearbeitungsmaschine nach Anspruch 2, dadurch gekennzeichnet, daß der konzentrische Abschnitt in einem Punkt endet, in dem eine durch dieden Punkt gehende Radiale einen Winkel von 45° mit einer durch die Drehachse (a) der Walze (10) gehenden Vertikalebene einschließt.

4. Bodenbearbeitungsmaschine nach einem der vorhergehenden Ansprüche, dadurch gekennzeichnet, daß das freie Ende des Tragarmes (27, 37) mit einem plattenförmigen Abstreiferteil (28, 38) versehen ist, welches einen Abschnitt aufweist, der vom freien Ende des Tragarmes (27, 37) aus schräg aufwärts und nach hinten gerichtet ist und bis nahe an die Zähne oder Nocken (13) der Walze (10) reicht.

5. Bodenbearbeitungsmaschine nach Anspruch 4, dadurch gekennzeichnet, daß der Abschnitt des plattenförmigen Abstreiferteiles (28, 38) im Bereich der Vorderseite des freien Endes des Tragarmes (27, 37) entlang einer Faltlinie in einen V-förmigen Abschnitt übergeht, der sich in bezug auf die Drehrichtung (B) der Walze (10) nach vorne erstreckt.

6. Bodenbearbeitungsmaschine nach einem der Ansprüche 2 bis 4 und Anspruch 5, dadurch gekennzeichnet, daß die Innenseite des Tragarmes (27, 37) von dem zylindrischen Träger (12) der Walze (10) einen Abstand hat, der mindestens etwa gleich der Dicke des V-förmigen Abschnittes des plattenförmigen Abstreiferteiles (28, 38) ist.

7. Bodenbearbeitungsmaschine nach einem der Ansprüche 4 bis 6, dadurch gekennzeichnet, daß das freie Ende des plattenförmigen Abstreiferteiles (28) unterhalb einer durch die Drehachse (a) der Walze (10) gehenden Horizontalebene liegt.

8. Bodenbearbeitungsmaschine nach einem der vorhergehenden Ansprüche, dadurch gekennzeichnet, daß die Abstreifer (26) mittels einer Stellvorrichtung einstellbar sind, die eine Gewindespindel (22) aufweist, welche sich mindestens etwa in Arbeitsrichtung der Maschine erstreckt.

9. Bodenbearbeitungsmaschine nach einem der vorhergehenden Ansprüche, dadurch gekennzeichnet, daß die Walze (10) Nocken (13) aufweist, welche mit einer Messerklinge (40) versehen sind, die sich mindestens etwa parallel zur Drehachse (a) der Walze (10) erstrecken.

10. Bodenbearbeitungsmaschine nach Anspruch 8 oder 9, dadurch gekennzeichnet, daß die Messerklinge (40) in Richtung auf ihre Enden V-förmig verläuft.

11. Bodenbearbeitungsmaschine nach Anspruch 10, dadurch gekennzeichnet, daß die Messerklinge (40) an einer tangential verlaufenden Seite eines Nockens (39) angebracht ist.

12. Bodenbearbeitungsmaschine nach einem der Ansprüche 4 bis 10, dadurch gekennzeichnet, daß das plattenförmige Abstreiferteil (38) an der Vorderseite und an der Rückseite eine geringere Breite hat als nahe der Mitte.

13. Bodenbearbeitungsmaschine nach einem der vorhergehenden Ansprüche, dadurch gekennzeichnet, daß sie eine Mehrzahl von Bodenbearbeitungsgliedern (3) aufweist, die um aufwärts gerichtete Wellen drehbar und in einer Reihe angeordnet sind, und daß die Walze (10) hinter den Bodenbearbeitungsgliedern 83) angeordet und relativ zu ihnen in der Höhe einstellbar und in mehreren Lagen feststellbar ist.

## Revendications

1. Machine pour cultiver le sol comprenant un chassis supportant au moins un rouleau compacteur (10), ledit rouleau comportant un élément porteur (12) muni de dents ou de cames (13) uniformément espacées, entre lesquelles sont disposés, à l'arrière du rouleau par rapport au sens de marche prévu pour le travail de la machine, des grattoirs (26, 36, 41), lesquels grattoirs comprennent une partie de grattoir (28, 38) dans laquelle ladite partie de grattoir s'étend obliquement vers le haut et vers l'arrière à partir dudit élément porteur (12), pour enlever la terre, au.moins de celui-ci, chaque grattoir étant monté sur un bras de support (27, 37), qui comprend, par rapport au chassis, une partie s'étendant vers le bas, caractérisée en ce que le bras de support (27, 37) est attaché au chassis en un point qui est disposé, en étant vu de dessus, en avant de l'axe de rotation (a) du rouleau (10), ladite partie dudit bras (27, 37) comprenant un prolongement s'étendant vers l'arrière sous ledit élément porteur (12) entre lesdites dents ou cames (13) sur au moins la moitié de la circonférence de l'élément porteur (12) et étant munie sur son côté postérieur de ladite partie grattante (28, 38).

2. Machine pour cultiver le sol selon la revendication 1, caractérisée en ce que ladite partie, s'étendant vers le bas dans la région de l'élément porteur (12) du rouleau (10), se joint à une partie qui s'étend concentriquement à l'axe de rotation (a) et se termine sur le côté postérieur du rouleau (10) où elle est munie de ladite partie grattante (28, 38).

3. Machine pour cultiver le sol selon la revendication 2, caractérisée en ce que ladite partie s'étendant concentriquement se termine en un point où une radiale passant par ce point inclut un angle de ± 45° avec un plan vertical passant par l'axe de rotation (a) du rouleau (10).

4. Machine pour cultiver le sol selon l'une quelconque des revendications précédentes, caractérisée en ce que l'extrémité libre du bras de support (27, 37) est munie d'une partie grattante (28, 38) en forme de plaque qui comprend une partie qui s'étend obliquement vers le haut et vers l'arrière à partir de l'extrémité libre du bras de support (27, 37) et qui arrive à proximité des dents ou cames (13) du rouleau (10).

5. Machine pour cultiver le sol selon la revendication 4, caractérisée en ce que ladite partie de la partie en forme de plaque (28, 38) dans la région du côté antérieur de l'extrémité libre du bras de support (27, 37) se joint par une ligne de pliure à une partie en forme de V s'étendant vers l'avant par rapport au sens de rotation (B) du rouleau (10).

6. Machine pour cultiver le sol selon l'une quelconque des revendications 2 à 4 et selon la revendication 5, caractérisée en ce que le côté intérieur du bras de support (27, 37) est situé, par rapport à l'élément porteur cylindrique (12) du rouleau (10), à une distance qui est au moins sensiblement égale à l'épaisseur de la partie en forme de V de la partie en forme de plaque (28, 38) du grattoir (26, 36).

7. Machine pour cultiver le sol selon l'une quelconque des revendications 4 à 6, caractérisée en ce que l'extrémité libre de la partie en forme de plaque (28) est située sous un plan horizontal passant par l'axe de rotation (a) du rouleu (10).

8. Machine pour cultiver le sol selon l'une quelconque des revendications précédentes, caractérisée en ce que les grattoirs (26) sont réglables au moyen d'un mécanisme de réglage qui comprend une tige filetée (22) s'étendant au moins sensiblement dans le sens de marche de la machine.

9. Machine pour cultiver le sol selon l'une quelconque des revendications précédentes, caractérisée en ce que le rouleau (10) comprend des cames (13) qui sont munies d'une lame (40) qui s'étend au moins sensiblement parallèlement à l'axe de rotation (a) du rouleau (10).

10. Machine pour cultiver le sol selon la revendication 8 ou 9, caractérisée en ce que ladite lame (40) s'étend en forme de V vers les extrémités.

11. Machine pour cultiver le sol selon la revendication 10, caractérisée en ce que ladite lame (40) est disposée sur un côté d'une came (39), lequel s'étend tangentiellement.

12. Machine pour cultiver le sol selon l'une quelconque des revendications 4 à 10, caractérisée en ce que la partie grattante en forme de plaque (38) du grattoir (36) a une largeur plus faible sur le côté antérieur et sur le côté postérieur que près du milieu.

13. Machine pour cultiver le sol selon l'une quelconque des revendications précédentes, caractérisée en ce qu'elle comprend une pluralité d'organes de travail du sol (3) pouvant tourner autour d'arbres dirigés vers le haut et disposés en une rangée, le rouleau (10) étant disposé derrière les organes de travail du sol (3) et étant, par rapport aux organes de travail du sol, réglable en hauteur et pouvant être fixé en plusieurs positions en hauteur.

FIG.1

FIG.2

FIG.3

FIG.4

FIG.5